# EUROPEAN PATENT APPLICATION

(11) **EP 1 586 998 A1**
(43) Date of publication of application: **19.10.2005**
(21) Application number: 03701796.9
(22) Date of filing: 20.01.2003
(51) Int. Cl.: G06F 12/14, G06F 3/14

(54) **COPY PREVENTION APPARATUS, COPY PREVENTION METHOD, AND PROGRAM FOR CAUSING COMPUTER TO EXECUTE THE METHOD**

(71) Applicant: FUJITSU LIMITED, Kawasaki-shi, Kanagawa 211-8588 (JP)
(72) Inventor: Tsuchimura, Tadao, Fujitsu Limited, Kawasaki-shi, Kanagawa 211-8588 (JP)
(74) Representative: Sunderland, James Harry
(86) International application number: PCT/JP2003/000416
(87) International publication number: WO 2004/066156

(57) **Abstract**

A clipboard copy preventing unit (9) prevents copying of copy prevention data from a clipboard, based on a result of monitoring by a clipboard monitoring unit (6). A screen copy instruction monitoring unit (5) monitors input of a screen copy instruction determined by an operating system, regarding copy prevention data. A screen copy preventing unit (8) prevents copying of copy prevention data from a screen, based on a result of the monitoring.

## Description

### TECHNICAL FIELD

The present invention relates to a copy prevention apparatus that prevents copying of data using a data area provided by an operating system and shared by plural applications operating on the operating system, a copy prevention method, and a program for making a computer execute the copy prevention method. Particularly, the invention relates to a copy prevention apparatus capable of preventing copying of data from a clipboard using an application having a screen capture function, a copy prevention method, and a program for making a computer execute the copy prevention method.

### BACKGROUND ART

In recent years, along with the diffusion of the Internet, there is a new threat in the society that company information and private information stored as classified information in a personal computer or a server connected to the Internet may leaked out, and these pieces of information can be made public on message boards or file exchange services of the Internet. Moreover, someone can attack a security hole of an OS (operating system), and can invade a personal computer or a server in order to obtain information, via the Internet. Otherwise, a person authorized to make reference to classified information within a company can intentionally take information out from the company and make the information public. These problems are difficult to deal with.

For example, Word, which is almost a pronoun of a word processor product of Microsoft Corporation, allows a password to be set to a document file to limit reading of the document file. Acrobat provided by Adobe Systems, Inc. for editing a document of a PDF (portable document format) as a de facto standard document format in the world of the Internet prohibits copy and print of a document, and prohibits copying of a document to a clipboard, thereby preventing leakage of the document contents. The clipboard is a memory area that is shared by many applications to exchange data. The clipboard is usually provided by the OS (operating system).

However, even when the application itself restricts copying of data to the clipboard thereby preventing pasting of the data to other document, or even when server's authentication is made essential, the use of the OS function makes it possible to take (i.e., to capture) a hard copy of a displayed screen itself. Therefore, there is a risk that a document displayed on a screen is converted into a file and is made public.

To overcome this problem, for example, Japanese Patent Application Laid-open No. 2001-75696 discloses a technique of changing the definition of a key of a screen capture determined by the OS before carrying out a screen display processing, thereby disabling the screen capture.

However, the screen copy prevention means disclosed in Japanese Patent Application Laid-open No. 2001-75696 monitors only the screen copy key and cannot prevent capturing of the screen performed using a method other than the use of the screen copy key, such as other application having the screen capture function.

The present invention has been achieved to solve the problem according to the above conventional technique. It is an object of the present invention to provide a copy prevention apparatus capable of preventing copying of data from a clipboard using an application having a screen capture function, a copy prevention method, and a program for making a computer execute the copy prevention method.

### DISCLOSURE OF THE INVENTION

According to an aspect of the present invention, a copy prevention apparatus that is provided by an operating system and that prevents copying of data using a data area shared by a plurality of applications that operate on the operating system includes a data area monitoring unit that monitors storing of copy prevention data into the data area; and a data area copy preventing unit that prevents copying of the copy prevention data from the data area, based on a result of the monitoring by the data area monitoring unit.

According to the above aspect, the data area monitoring unit monitors storing of copy prevention data into the data area. The data area copy preventing unit prevents copying of the copy prevention data from the data area, based on a result of the monitoring carried out by the data area monitoring unit.

According to another aspect of the present invention, the copy prevention apparatus further includes a screen copy instruction monitoring unit that monitors input of a screen copy instruction determined by an operating system, regarding the copy prevention data; and a screen copy preventing unit that prevents copying of the copy prevention data displayed on a screen using the screen display, based on a result of the monitoring by the screen copy instruction monitoring unit.

According to the above aspect, the screen copy instruction monitoring unit monitors input of the screen copy instruction determined by the operating system regarding the copy prevention data. The screen copy preventing unit prevents copying of the copy prevention data displayed on the screen using the screen display, based on a result of the monitoring carried out by the screen copy instruction monitoring unit.

According to still another aspect of the present invention, in the copy prevention apparatus, the data area monitoring unit monitors whether data stored in the data area is copy-permitted data.

According to the above aspect, the data area monitoring unit monitors whether data stored in the data area is copy-permitted data.

According to still another aspect of the present invention, in the copy prevention apparatus, the data area monitoring unit monitors whether a user who stores data in the data area is a person who is permitted to copy the data.

According to the above aspect, the data area monitoring unit monitors whether a user who stores data in the data area is a person who is permitted to copy the data.

According to still another aspect of the present invention, in the copy prevention apparatus, the data area monitoring unit monitors whether the number of times of copying data stored in the data area is a predetermined number of times.

According to the above aspect, the data area monitoring unit monitors whether data stored in the data area has been copied by a predetermined number of times.

According to still another aspect of the present invention, in the copy prevention apparatus, the screen copy instruction monitoring unit monitors whether the screen copy instructed data is copy-permitted data.

According to the above aspect, the screen copy instruction monitoring unit monitors whether data of which screen copy is instructed is copy-permitted data.

According to still another aspect of the present invention, in the copy prevention apparatus, the screen copy instruction monitoring unit monitors whether a user who instructs the screen copying is a person who is permitted to copy the data.

According to the above aspect, the screen copy instruction monitoring unit monitors whether a user who instructs the screen copy is a person who is permitted to copy the data.

According to still another aspect of the present invention, in the copy prevention apparatus, the screen copy instruction monitoring unit monitors whether the number of times of an instruction is a predetermined number.

According to the above aspect, the screen copy instruction monitoring unit monitors whether the instruction is given by a predetermined number of times.

According to still another aspect of the present invention, in the copy prevention apparatus, the data area copy preventing unit processes data stored in the data area.

According to the above aspect, the data area copy preventing unit processes data stored in the data area.

According to still another aspect of the present invention, in the copy prevention apparatus, the screen copy preventing unit invalidates the function a screen copy instruction, processes data displayed on the screen, and processes data stored in the data area.

According to the above aspect, the screen copy preventing unit invalidates the function of a screen copy instruction, processes data displayed on the screen, and processes data stored in the data area.

According to still another aspect of the present invention, the copy prevention apparatus further includes a setting unit that selectively receives and sets a monitoring method by the screen copy instruction monitoring unit, a prevention method by the screen copy preventing unit, a monitoring method by the data area monitoring unit, and/or a prevention method by the data area copy preventing unit.

According to the above aspect, a setting unit selectively receives and sets a monitoring method by a screen copy instruction monitoring procedure, a prevention method by a screen copy preventing unit, a monitoring method by a data area monitoring unit, and/or a prevention method by a data area copy preventing unit.

According to still another aspect of the present invention, a copy prevention method that is provided by an operating system and that prevents copying of data using a data area shared by a plurality of applications that operate on the operating system includes monitoring storing of copy prevention data into the data area; and preventing copying of the copy prevention data from the data area based on a result of the monitoring storing.

According to the above aspect, the data area monitoring step monitors storing of copy prevention data into the data area. The data area copy preventing step prevents copying of the copy prevention data from the data area, based on a result of the monitoring carried out at the data area monitoring step.

According to still another aspect of the present invention, the copy prevention method further includes a screen copy instruction monitoring step that monitors input of a screen copy instruction determined by an operating system, regarding the copy prevention data; and a screen copy preventing step that prevents copying of the copy prevention data displayed on a screen using the screen display, based on a result of the monitoring by the screen copy instruction monitoring step.

According to the above aspect, the screen copy instruction monitoring step monitors input of the screen copy instruction determined by the operating system regarding the copy prevention data. The screen copy preventing step prevents copying of the copy prevention data displayed on the screen using the screen display, based on a result of the monitoring carried out by the screen copy instruction monitoring step.

According to still another aspect of the present invention, in the copy prevention method, the data area monitoring step monitors whether data stored in the data area is copy-permitted data.

According to the above aspect, the data area monitoring step monitors whether a user who stores data in the data area is a person who is permitted to copy the data.

According to still another aspect of the present invention, in the copy prevention method, the data area monitoring step monitors whether the number of times of copying data stored in the data area is a predetermined number of times.

According to the above aspect, the data area monitoring step monitors whether data stored in the data area has been copied by a predetermined number of times.

According to still another aspect of the present invention, in the copy prevention method, the screen copy instruction monitoring step monitors whether the screen copy instructed data is copy-permitted data.

According to the above aspect, the screen copy instruction monitoring step monitors whether data of which screen copy is instructed is copy-permitted data.

According to still another aspect of the present invention, in the copy prevention method, the screen copy instruction monitoring step monitors whether a user who instructs the screen copying is a person who is permitted to copy the data.

According to the above aspect, the screen copy instruction monitoring step monitors whether a user who instructs the screen copy is a person who is permitted to copy the data.

According to still another aspect of the present invention, in the copy prevention method, the screen copy instruction monitoring step monitors whether the number of times of an instruction is a predetermined number.

According to the above aspect, the screen copy instruction monitoring step monitors whether the instruction is given by a predetermined number of times.

According to still another aspect of the present invention, in the copy prevention method, the data area copy preventing step processes data stored in the data area.

According to the above aspect, the data area copy preventing step processes data stored in the data area.

According to still another aspect of the present invention, in the copy prevention method, the screen copy preventing step invalidates the function a screen copy instruction, processes data displayed on the screen, and processes data stored in the data area.

According to the above aspect, the screen copy preventing step invalidates the function of a screen copy instruction, processes data displayed on the screen, and processes data stored in the data area.

According to still another aspect of the present invention, the copy prevention method further includes a setting step that selectively receives and sets a monitoring method by the screen copy instruction monitoring step, a prevention method by the screen copy preventing step, a monitoring method by the data area monitoring step, and/or a prevention method by the data area copy preventing step.

According to the above aspect, a setting step selectively receives and sets a monitoring method by a screen copy instruction monitoring procedure, a prevention method by a screen copy preventing step, a monitoring method by a data area monitoring step, and/or a prevention method by a data area copy preventing step.

According to still another aspect of the present invention, a computer program that implements on a computer a copy prevention method that is provided by an operating system and that prevents copying of data using a data area shared by a plurality of applications that operate on the operating system, the computer program causes the computer to execute monitoring storing of copy prevention data into the data area; and preventing copying of the copy prevention data from the data area based on a result of the monitoring storing.

According to the above aspect, the data area monitoring step monitors storing of copy prevention data into the data area. The data area copy preventing step prevents copying of the copy prevention data from the data area, based on a result of the monitoring carried out at the data area monitoring step.

According to still another aspect of the present invention, the computer program further causes the computer to execute a screen copy instruction monitoring step that monitors input of a screen copy instruction determined by an operating system, regarding the copy prevention data; and a screen copy preventing step that prevents copying of the copy prevention data displayed on a screen using the screen display, based on a result of the monitoring by the screen copy instruction monitoring step.

According to the above aspect, the screen copy instruction monitoring step monitors input of the screen copy instruction determined by the operating system regarding the copy prevention data. The screen copy preventing step prevents copying of the copy prevention data displayed on the screen using the screen display, based on a result of the monitoring carried out by the screen copy instruction monitoring step.

According to still another aspect of the present invention, in the computer program, the data area monitoring step monitors whether data stored in the data area is copy-permitted data.

According to the above aspect, the data area monitoring step monitors whether a user who stores data in the data area is a person who is permitted to copy the data.

According to still another aspect of the present invention, in the computer program, the data area monitoring step monitors whether the number of times of copying data stored in the data area is a predetermined number of times.

According to the above aspect, the data area monitoring step monitors whether data stored in the data area has been copied by a predetermined number of times.

According to still another aspect of the present invention, in the computer program, the screen copy instruction monitoring step monitors whether the screen copy instructed data is copy-permitted data.

According to the above aspect, the screen copy instruction monitoring step monitors whether data of which screen copy is instructed is copy-permitted data.

According to still another aspect of the present invention, in the computer program, the screen copy instruction monitoring step monitors whether a user who instructs the screen copying is a person who is permitted to copy the data.

According to the above aspect, the screen copy instruction monitoring step monitors whether a user who instructs the screen copy is a person who is permitted to copy the data.

According to still another aspect of the present invention, in the computer program, the screen copy instruction monitoring step monitors whether the number of times of an instruction is a predetermined number.

According to the above aspect, the screen copy instruction monitoring step monitors whether the instruction is given by a predetermined number of times.

According to still another aspect of the present invention, in the computer program, the data area copy preventing step processes data stored in the data area.

According to the above aspect, the data area copy preventing step processes data stored in the data area.

According to still another aspect of the present invention, in the computer program, the screen copy preventing step invalidates the function a screen copy instruction, processes data displayed on the screen, and processes data stored in the data area.

According to the above aspect, the screen copy preventing step invalidates the function of a screen copy instruction, processes data displayed on the screen, and processes data stored in the data area.

According to still another aspect of the present invention, the computer program further causes the computer to execute a setting step that selectively receives and sets a monitoring method by the screen copy instruction monitoring step, a prevention method by the screen copy preventing step, a monitoring method by the data area monitoring step, and/or a prevention method by the data area copy preventing step.

According to the above aspect, a setting step selectively receives and sets a monitoring method by a screen copy instruction monitoring procedure, a prevention method by a screen copy preventing step, a monitoring method by a data area monitoring step, and/or a prevention method by a data area copy preventing step.

### BRIEF DESCRIPTION OF THE DRAWINGS

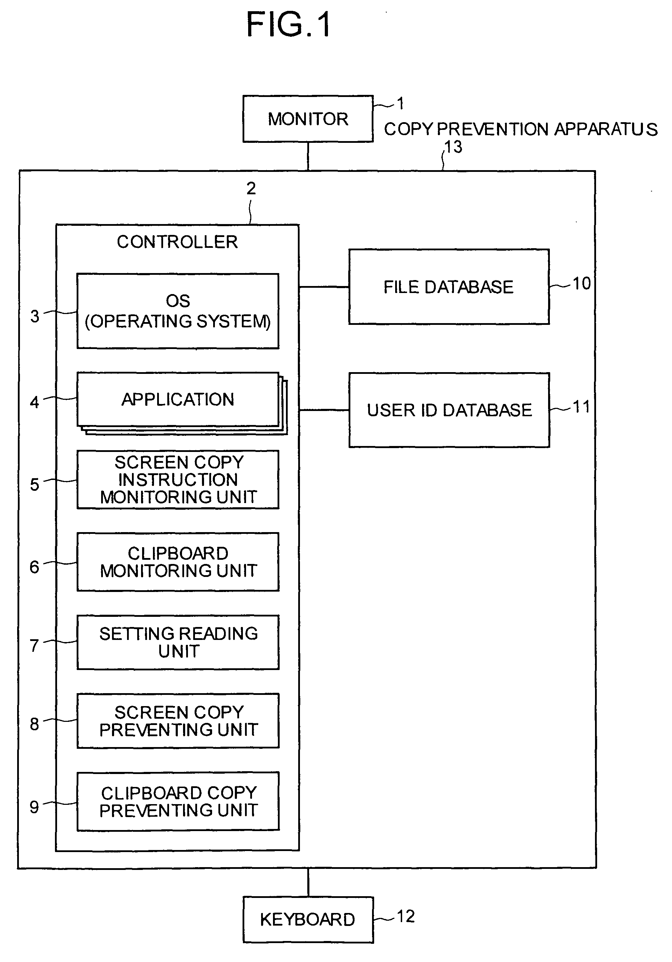

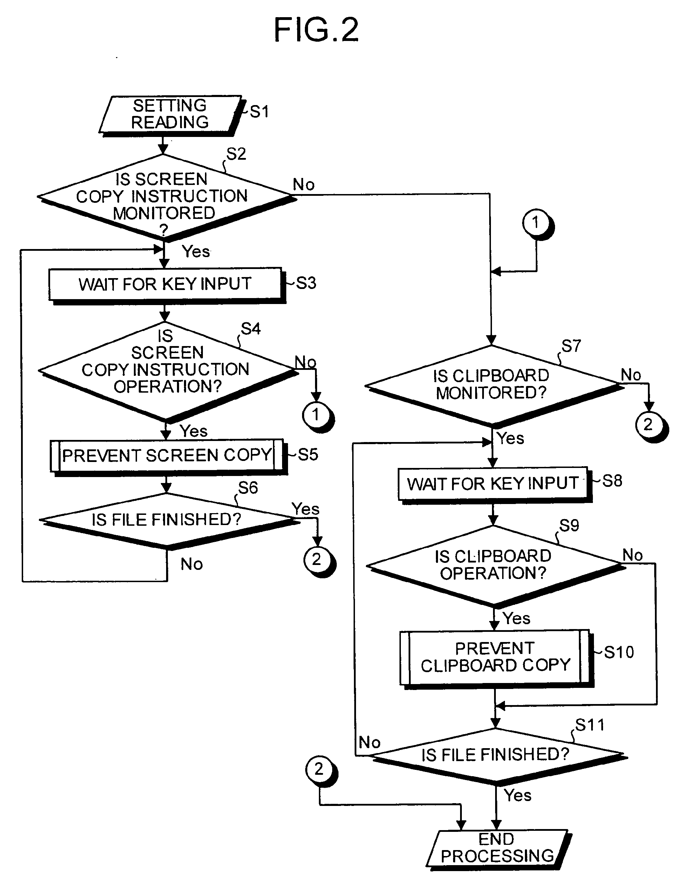

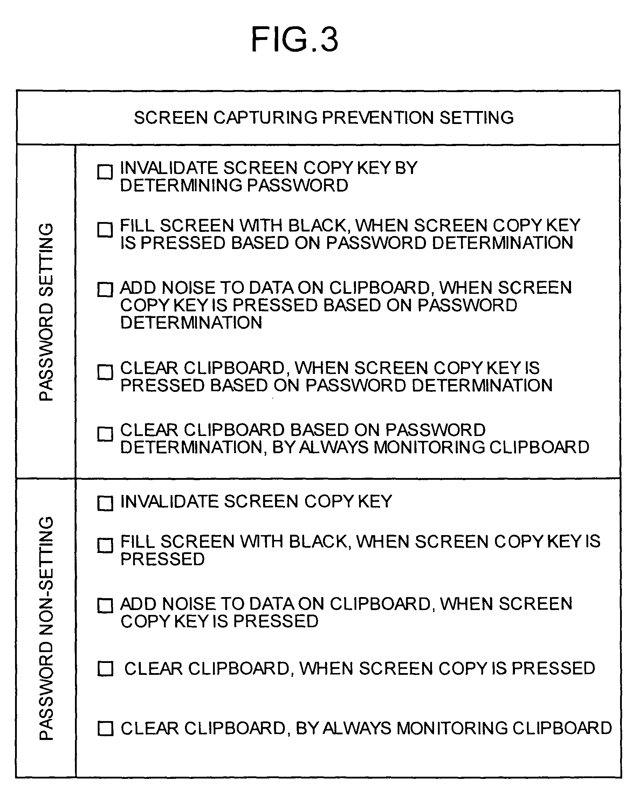

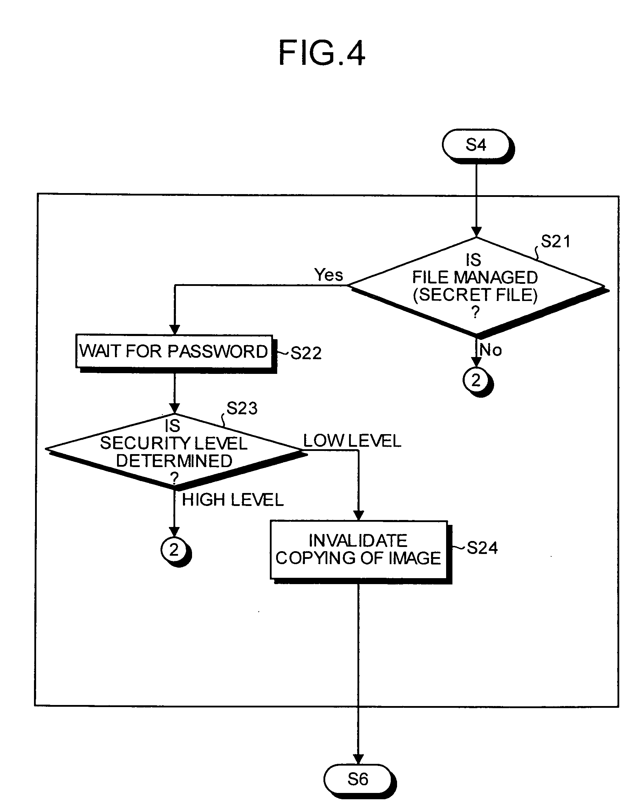

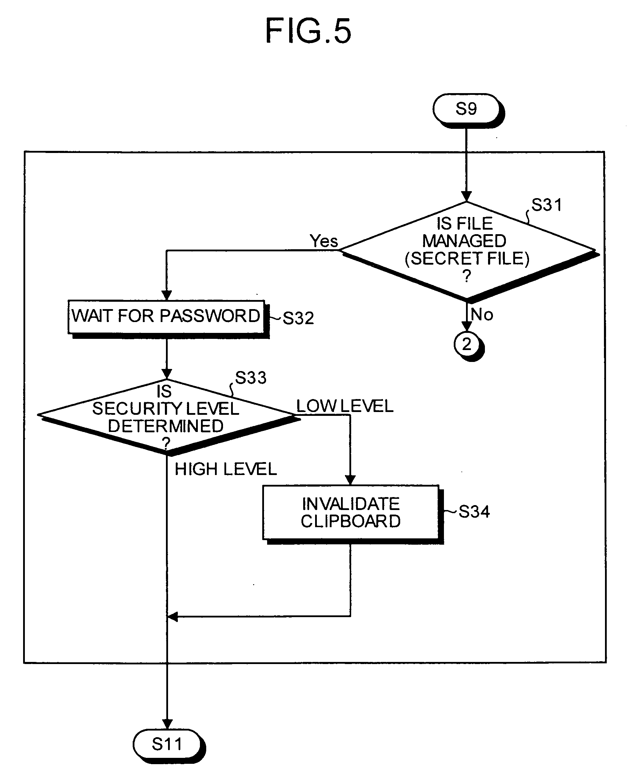

Fig. 1 is a functional block diagram of a copy prevention apparatus according to an embodiment of the present invention; Fig. 2 is a flowchart of a processing procedure performed by the copy prevention apparatus shown in Fig. 1; Fig. 3 is an exemplary screen capture prevention setting screen; Fig. 4 is a flowchart of an image copy prevention processing performed by the copy prevention apparatus shown in Fig. 1; and Fig. 5 is a flowchart of a data area copy prevention processing performed by the copy prevention apparatus shown in Fig. 1.

### BEST MODE FOR CARRYING OUT THE INVENTION

Exemplary embodiments of a copy prevention apparatus, a copy prevention method, and a program for making a computer execute the method will be explained below with reference to the accompanying drawings. In the embodiments, the outline, main characteristics, and configurations of the copy prevention apparatus, the copy prevention method, and the program for making a computer execute the method will be explained, and the procedure of the copy prevention processing carried out by the copy prevention apparatus is explained at the end.

### Outline.

Fig. 1 is a functional block diagram of a copy prevention apparatus according to an embodiment of the present invention. A copy prevention apparatus 13 is provided by an operating system. The copy prevention apparatus 13 monitors a data area shared by plural applications that operate on the operating system, prevents copying of data using the data area, monitors a screen copy key as a function of the operating system, and prevents a screen copy using the screen copy key.

### Main characteristics.

The copy prevention apparatus monitors storing of copy prevention data into a data area that is shared by applications (this data area is called a clipboard), and prevents copying of the copy prevention data from the clipboard based on a result of the monitoring. Thus, the copy prevention apparatus can prevent copying of data from the clipboard by an application having a screen capture function.

Specifically, when a user displays a document from which the user wishes to obtain information on a screen, in capturing the document into the clipboard, the user presses the "Print Screen" key, or the "ALT" key and the "Print Screen" key on the keyboard simultaneously. As a result, the screen information is stored into the clipboard on the memory. Alternatively, the user can use an exclusive screen capturing tool to copy the screen information into the clipboard. Therefore, it is possible to prevent the possibility of information leakage, by making a certain arrangement to the data present on the clipboard or by making it impossible to store the screen information.

The following five methods can be considered to prevent copying of the data area. (1) At the time of capturing a document into the clipboard, by determining a capturing key cord, the processing is invalidated. (2) At the time of capturing a document into the clipboard, by determining a capturing key cord, the document is filled with a single color, for example a black color, thereby making the captured data meaningless. (3) Immediately after the document is captured into the clipboard, random data is added to the captured data present on the memory, thereby making the captured data meaningless. (4) Immediately after the document is captured into the clipboard, the clipboard present on the memory is cleared, thereby making it impossible to capture data. (5) The clipboard is monitored, and the clipboard is always cleared when classified document data is opened.

The copy prevention apparatus monitors input of a screen copy instruction determined by the operating system regarding copy prevention data, and prevents copying of the copy prevention data displayed on the screen using the screen display, based on a result of the monitoring. Thus, the copy prevention apparatus can prevent copying of the displayed screen itself by the function of the operating system.

Specifically, there are broadly three methods for preventing copying of the screen as follows.
(A) By reading the setting, it is determined whether a monitoring is the monitoring of the print screen key or the monitoring of the clipboard.
(B) When the print screen key is monitored, a processing corresponding to the setting is carried out. The screen copy prevention method (B) is explained below in further detail.
   (B-1) When the key invalidation is checked, the print screen operation is not returned to the operating system, and it is arranged such that nothing occurs even when the key is pressed.
   (B-2) In the case of a check of filling the document with black, the document area on the screen (for example, a window in which the document is displayed, in the case of a multi-window operating system) is filled with black, and then the print screen processing is delivered to the operating system. Thereafter, the filled area is returned to the original.
   (B-3) In the case of noise, the print screen processing is delivered to the OS, and the data on the clipboard is developed to the memory. Noise is then added to the image data, such as a bit inversion or a mask processing is carried out, and the data is returned to the clipboard.
   (B-4) In the case of clear, after the print screen processing is delivered to the OS, the data on the clipboard is deleted.
(C) In the case of the data area monitoring, it is monitored whether image data is present on the clipboard. When the image data is present, the image data is deleted immediately. This processing is necessary when the image capture application is used without using the print screen key.

In any of the cases (A), (B), and (C), the processing is carried out only when the monitored document is opened. The processing ends when the document is closed. It is of course possible to always carry out a similar monitoring while the operating system is operating. The present invention can be similarly applied to image data, web pages and e-mail data displayed on the screen for a limited person.

### Configuration of the apparatus.

The configuration of the copy prevention apparatus is explained with reference to Fig. 1. As shown in Fig. 1, the copy prevention apparatus 13 includes a controller 2 that controls document information and image information displayed as a screen on a monitor 1, a file database 10 that stores document information and image information, and a user ID database 11 that has user identifications (IDs) given to users who refer to the information.

As shown in Fig. 1, the controller 2 includes an operating system (OS) 3, at least one application 4 capable of making a hard copy of a file in the file database, a screen copy instruction monitoring unit 5 that monitors a screen copy key of the OS 3, plural applications 4 provided by the OS 3, a clipboard monitoring unit 6 that monitors a data area (clipboard) shared by the plural applications, a setting reading unit 7 that reads conditions concerning a security level set by a manager, who manages the copy prevention apparatus 13 according to the present invention, from a keyboard 12, a screen copy preventing unit 8 that prevents the OS 3 and the application 4 from copying the screen, and a clipboard copy preventing unit 9 that prevents the application 4 provided by the OS 3 from copying the shared data area (clipboard). The shared data area (clipboard) is a known technique used in Microsoft Windows or the like, and therefore, a detailed description of the shared data area is omitted.

The copy prevention apparatus 13 is realized by a computer such as a generally known personal computer. In other words, this computer includes a CPU (central processing unit), a memory, a hard disk, a data communication card, etc. as main constituent elements. These constituent elements are connected to each other via a bus to exchange data between these elements. A program, the OS 3, and the application 4 that realize the functions of the present invention are stored in the hard disk, and are suitably loaded on the memory according to execution instructions. The file database 10 and the user ID database 11 are also stored in the hard disk, and are suitably loaded on the memory and are referred to by various kinds of programs.

The monitor 1 and the keyboard 12 are connected to the computer, and the CPU controls input and output of data. The data communication card is used to transmit and receive data and programs via a network. The program according to the present invention is loaded on the memory based on the execution instruction. The program controls the CPU to make the computer function as the screen copy instruction monitoring unit 5, the clipboard monitoring unit 6, the setting reading unit 7, the screen copy preventing unit 8, and the clipboard copy preventing unit 9.

Various units in the appended claims correspond to the units shown in Fig. 1 as follows. A data area monitoring unit corresponds to the clipboard monitoring unit 6. A data area copy preventing unit corresponds to the clipboard copy preventing unit 9. A screen copy instruction monitoring unit corresponds to the screen copy instruction monitoring unit 5. A screen copy preventing unit corresponds to the screen copy preventing unit 8. A setting unit corresponds to the setting reading unit 7.

### Processing procedure.

A flowchart of a processing procedure of the copy prevention apparatus according to the present invention (Fig. 2) is explained next. The setting reading unit 7 reads a security condition (refer to Fig. 3. Fig. 3 is explained later) set by a manager (step S1). Thereafter, the screen copy instruction monitoring unit 6 determines whether to monitor a screen copy key, based on the security condition (step S2). In monitoring the screen copy key, the screen copy instruction monitoring unit 5 waits for a key input by the user (step S3). The screen copy instruction monitoring unit 5 determines whether an input key is a screen copy key (step S4). When the input key is the screen copy key, the screen copy preventing unit 8 prevents copying of the screen (step S5). The controller 2 determines whether a file is finished (step S6).

On the other hand, when the screen copy instruction monitoring unit 6 does not monitor the screen copy key, the clipboard monitoring unit 6 determines whether to monitor the clipboard based on the security condition (step S7). In the case of monitoring the clipboard (a shared data area), the clipboard monitoring unit 6 waits for a key input by the user (step S8). The clipboard monitoring unit 6 determines whether there is an operation of storing data into the clipboard based on the input key (step S9). When the clipboard operates, the clipboard copy preventing unit 9 prevents copying of the data (step S10). Thereafter, the controller 2 determines whether the file is finished (step S11).

While both the monitoring of the screen copy instruction and the monitoring of the data area are executed in the processing shown in Fig. 2, either one of the monitoring and a processing based on a result of this monitoring can be executed.

An example of a setting screen based on which the manager carries out a screen capturing prevention setting from the monitor 1 is explained next with reference to Fig. 3. The capturing refers to making a hard copy of the screen. As shown in Fig. 3, a setting of the screen copy key (this is also called a print screen key) and a setting of the clipboard can be selected by checking, as one example of the screen copy instruction.

A password shown in Fig. 3 is given for each user who is permitted to read the file database 10. For example, data concerning a security level of any one of "0" to "10" is allocated to a combination of a login ID and the password. This information is recorded in the user ID database 11 shown in Fig. 11.

Each file of the file database 10 is similarly provided with a security level of any one of "0" to "10" corresponding to the security level of the user ID and the password, for example. "0" represents a security level of a file that any user is permitted to make copy of. "10" represents a securing level of the highest secrecy. Based on these security levels, a user having a larger number than the security level of a certain file can be set to be able to copy this file. This determination method is hereinafter called a password determination.

A flowchart of the screen copy prevention processing (Fig. 4) and a flowchart of the data area copy prevention processing (Fig. 5) are explained below.

As shown in Fig. 4, the controller 2 determines whether a file that the user is referring to is a secret file (step S21). When the file that the user is referring to is a secret file, the controller 2 waits for a password input by the user (step S22). Thereafter, the controller 2 determines the security level of the file and the security of the user based on the password (step S23). When the security level of the user is high, the controller 2 ends the processing. When the security level of the user is low, the image copy preventing unit 8 invalidates copying of the image (step S24).

While the print screen is monitored in the processing shown in Fig. 4, the clipboard is monitored in the processing shown in Fig. 5. Both processing procedures are similar. Therefore, explanation of the flowchart shown in Fig. 5 is omitted.

In the flowchart of the data area copy prevention processing shown in Fig. 5, the determination condition of the security determination can be changed. For example, an item "By always monitoring the clipboard, when secret data is clipped by at least a certain number of times, the clipboard is cleared." is added as a new check item to the setting condition shown in Fig. 3. The determination condition of the security determination shown in Fig. 5 can be set as follows. When secret data is clipped by at least a certain number of times while the application is activated, the clipboard is invalidated.

As explained above, according to the present invention, because a majority of users cannot take classified documents out from the company, many companies can substantially restrict information leakage. In order to maintain the security, users are not required to carry out a specific operation, which has an advantage that the present invention is less difficult to apply.

The copy prevention apparatus explained in the present embodiment can be also realized by making a computer such as a personal computer and a workstation execute a program prepared in advance. This program can be distributed via a network such as the Internet. This program can be also recorded onto a computer-readable recording medium such as a hard disk, a flexible disk (FD), a CD-ROM, an MO, and a DVD, and can be executed by the computer.

As explained above, according to an aspect of the present invention, the data area monitoring unit monitors storing of copy prevention data into the data area. The data area copy preventing unit prevents copying of the copy prevention data from the data area, based on a result of the monitoring carried out by the data area monitoring unit. Thus, the copy prevention apparatus can prevent copying of data from the clipboard by an application having a screen capture function.

According to another aspect of the present invention, the screen copy instruction monitoring unit monitors input of the screen copy instruction determined by the operating system regarding the copy prevention data. The screen copy preventing unit prevents copying of the copy prevention data displayed on the screen using the screen display, based on a result of the monitoring carried out by the screen copy instruction monitoring unit. Thus, the copy prevention apparatus can prevent copying of the displayed screen itself by the function of the operating system.

According to still another aspect of the present invention, the data area monitoring unit monitors whether data stored in the data area is copy-permitted data. Accordingly, there is an effect that copying of data stored in the data area can be prevented corresponding to the data.

According to still another aspect of the present invention, the data area monitoring unit monitors whether a user who stores data in the data area is a person who is permitted to copy the data. Accordingly, there is an effect that copying of data stored in the data area can be prevented corresponding to the security level of the data.

According to still another aspect of the present invention, the data area monitoring unit monitors whether data stored in the data area has been copied by a predetermined number of times. Accordingly, there is an effect that copying of data stored in the data area can be prevented corresponding the data copying frequency.

According to still another aspect of the present invention, the screen copy instruction monitoring unit monitors whether data of which screen copy is instructed is copy-permitted data. Accordingly, there is an effect that copying of data displayed on the screen using the copy key of the operating system can be prevented corresponding to the data.

According to still another aspect of the present invention, the screen copy instruction monitoring unit monitors whether a user who instructs the screen copy is a person who is permitted to copy the data. Accordingly, there is an effect that copying of data displayed on the screen using the copy key of the operating system can be prevented corresponding to the security level of the data.

According to still another aspect of the present invention, the screen copy instruction monitoring unit monitors whether the instruction is given by a predetermined number of times. Accordingly, there is an effect that copying of data displayed on the screen using the copy key of the operating system can be prevented corresponding to the data copy instruction frequency.

According to still another aspect of the present invention, the data area copy preventing unit processes data stored in the data area. Accordingly, there is an effect that data stored in the data area can be invalidated.

According to still another aspect of the present invention, the screen copy preventing unit invalidates the function of a screen copy instruction, processes data displayed on the screen, and processes data stored in the data area. Accordingly, there is an effect that data displayed on the screen based on the screen copy instruction can be invalidated.

According to still another aspect of the present invention, a setting unit selectively receives and sets a monitoring method by a screen copy instruction monitoring procedure, a prevention method by a screen copy preventing unit, a monitoring method by a data area monitoring unit, and/or a prevention method by a data area copy preventing unit. Accordingly, there is an effect that the manager can set a method based on a security level.

According to still another aspect of the present invention, the data area monitoring step monitors storing of copy prevention data into the data area. The data area copy preventing step prevents copying of the copy prevention data from the data area, based on a result of the monitoring carried out at the data area monitoring step. Thus, the copy prevention method can prevent copying of data from the clipboard by an application having a screen capture function.

According to still another aspect of the present invention, the screen copy instruction monitoring step monitors input of the screen copy instruction determined by the operating system regarding the copy prevention data. The screen copy preventing step prevents copying of the copy prevention data displayed on the screen using the screen display, based on a result of the monitoring carried out by the screen copy instruction monitoring step. Thus, the copy prevention method can prevent copying of the displayed screen itself by the function of the operating system.

According to still another aspect of the present invention, the data area monitoring step monitors whether data stored in the data area is copy-permitted data. Accordingly, there is an effect that copying of data stored in the data area can be prevented corresponding to the data.

According to still another aspect of the present invention, the data area monitoring step monitors whether the number of times of copying data stored in the data area is a predetermined number of times. Accordingly, there is an effect that copying of data stored in the data area can be prevented corresponding to the security level of the data.

According to still another aspect of the present invention, the screen copy instruction monitoring step monitors whether the screen copy instructed data is copy-permitted data. Accordingly, there is an effect that copying of data stored in the data area can be prevented corresponding the data copying frequency.

According to still another aspect of the present invention, the screen copy instruction monitoring step monitors whether a user who instructs the screen copying is a person who is permitted to copy the data. Accordingly, there is an effect that copying of data displayed on the screen using the copy key of the operating system can be prevented corresponding to the data.

According to still another aspect of the present invention, the screen copy instruction monitoring step monitors whether the number of times of an instruction is a predetermined number. Accordingly, there is an effect that copying of data displayed on the screen using the copy key of the operating system can be prevented corresponding to the security level of the data.

According to still another aspect of the present invention, the screen copy instruction monitoring step monitors whether the instruction is given by a predetermined number of times. Accordingly, there is an effect that copying of data displayed on the screen using the copy key of the operating system can be prevented corresponding to the data copy instruction frequency.

According to still another aspect of the present invention, the data area copy preventing step processes data stored in the data area. Accordingly, there is an effect that data stored in the data area can be invalidated.

According to still another aspect of the present invention, the screen copy preventing step invalidates the function of a screen copy instruction, processes data displayed on the screen, and processes data stored in the data area. Accordingly, there is an effect that data displayed on the screen based on the screen copy instruction can be invalidated.

According to still another aspect of the present invention, a setting step selectively receives and sets a monitoring method by a screen copy instruction monitoring procedure, a prevention method by a screen copy preventing step, a monitoring method by a data area monitoring step, and/or a prevention method by a data area copy preventing step. Accordingly, there is an effect that the manager can set a method based on a security level.

According to still another aspect of the present invention, the data area monitoring step monitors storing of copy prevention data into the data area. The data area copy preventing step prevents copying of the copy prevention data from the data area, based on a result of the monitoring carried out at the data area monitoring step. Thus, the copy prevention method can prevent copying of data from the clipboard by an application having a screen capture function.

According to another aspect of the present invention, the screen copy instruction monitoring step monitors input of the screen copy instruction determined by the operating system regarding the copy prevention data. The screen copy preventing step prevents copying of the copy prevention data displayed on the screen using the screen display, based on a result of the monitoring carried out by the screen copy instruction monitoring step. Thus, the copy prevention program can prevent copying of the displayed screen itself by the function of the operating system.

According to still another aspect of the present invention, the data area monitoring step monitors whether data stored in the data area is copy-permitted data. Accordingly, there is an effect that copying of data stored in the data area can be prevented corresponding to the data.

According to still another aspect of the present invention, the data area monitoring step monitors whether the number of times of copying data stored in the data area is a predetermined number of times. Accordingly, there is an effect that copying of data stored in the data area can be prevented corresponding to the security level of the data.

According to still another aspect of the present invention, the screen copy instruction monitoring step monitors whether the screen copy instructed data is copy-permitted data. Accordingly, there is an effect that copying of data stored in the data area can be prevented corresponding the data copying frequency.

According to still another aspect of the present invention, the screen copy instruction monitoring step monitors whether a user who instructs the screen copying is a person who is permitted to copy the data. Accordingly, there is an effect that copying of data displayed on the screen using the copy key of the operating system can be prevented corresponding to the data.

According to still another aspect of the present invention, the screen copy instruction monitoring step monitors whether the number of times of an instruction is a predetermined number. Accordingly, there is an effect that copying of data displayed on the screen using the copy key of the operating system can be prevented corresponding to the security level of the data.

According to still another aspect of the present invention, the screen copy instruction monitoring step monitors whether the instruction is given by a predetermined number of times. Accordingly, there is an effect that copying of data displayed on the screen using the copy key of the operating system can be prevented corresponding to the data copy instruction frequency.

According to still another aspect of the present invention, the data area copy preventing step processes data stored in the data area. Accordingly, there is an effect that data stored in the data area can be invalidated.

According to still another aspect of the present invention, the screen copy preventing step invalidates the function of a screen copy instruction, processes data displayed on the screen, and processes data stored in the data area. Accordingly, there is an effect that data displayed on the screen based on the screen copy instruction can be invalidated.

According to still another aspect of the present invention, a setting step selectively receives and sets a monitoring method by a screen copy instruction monitoring procedure, a prevention method by a screen copy preventing step, a monitoring method by a data area monitoring step, and/or a prevention method by a data area copy preventing step. Accordingly, there is an effect that the manager can set a method based on a security level.

### INDUSTRIAL APPLICABILITY

As explained above, with the copy prevention apparatus, the copy prevention method, and the copy prevention program according to the present invention, many companies can substantially restrict information leakage; because, a majority of users cannot take classified documents out from the company. Moreover, to maintain the security, users are not required to carry out a specific operation, which has an advantage that the present invention is less difficult to apply.

## Claims

1. A copy prevention apparatus that is provided by an operating system and that prevents copying of data using a data area shared by a plurality of applications that operate on the operating system, comprising:
a data area monitoring unit that monitors storing of copy prevention data into the data area; and
a data area copy preventing unit that prevents copying of the copy prevention data from the data area, based on a result of the monitoring by the data area monitoring unit.

2. The copy prevention apparatus according to claim 1, further comprising:
a screen copy instruction monitoring unit that monitors input of a screen copy instruction determined by an operating system, regarding the copy prevention data; and
a screen copy preventing unit that prevents copying of the copy prevention data displayed on a screen using the screen display, based on a result of the monitoring by the screen copy instruction monitoring unit.

3. The copy prevention apparatus according to claim 1 or 2, wherein the data area monitoring unit monitors whether data stored in the data area is copy-permitted data.

4. The copy prevention apparatus according to claim 1 or 2, wherein the data area monitoring unit monitors whether a user who stores data in the data area is a person who is permitted to copy the data.

5. The copy prevention apparatus according to claim 1 or 2, wherein the data area monitoring unit monitors whether the number of times of copying data stored in the data area is a predetermined number of times.

6. The copy prevention apparatus according to claim 1 or 2, wherein the screen copy instruction monitoring unit monitors whether the screen copy instructed data is copy-permitted data.

7. The copy prevention apparatus according to claim 1 or 2, wherein the screen copy instruction monitoring unit monitors whether a user who instructs the screen copying is a person who is permitted to copy the data.

8. The copy prevention apparatus according to claim 1 or 2, wherein the screen copy instruction monitoring unit monitors whether the number of times of an instruction is a predetermined number.

9. The copy prevention apparatus according to claim 1, wherein the data area copy preventing unit processes data stored in the data area.

10. The copy prevention apparatus according to claim 2, wherein the screen copy preventing unit invalidates the function a screen copy instruction, processes data displayed on the screen, and processes data stored in the data area.

11. The copy prevention apparatus according to claim 1 or 2, further comprising a setting unit that selectively receives and sets a monitoring method by the screen copy instruction monitoring unit, a prevention method by the screen copy preventing unit, a monitoring method by the data area monitoring unit, and/or a prevention method by the data area copy preventing unit.

12. A copy prevention method that is provided by an operating system and that prevents copying of data using a data area shared by a plurality of applications that operate on the operating system, comprising:
a data area monitoring step that monitors storing of copy prevention data into the data area; and
a data area copy preventing step that prevents copying of the copy prevention data from the data area, based on a result of the monitoring by the data area monitoring step.

13. The copy prevention method according to claim 12, further comprising:
a screen copy instruction monitoring step that monitors input of a screen copy instruction determined by an operating system, regarding the copy prevention data; and
a screen copy preventing step that prevents copying of the copy prevention data displayed on a screen using the screen display, based on a result of the monitoring by the screen copy instruction monitoring step.

14. The copy prevention method according to claim 12 or 13, wherein the data area monitoring step monitors whether data stored in the data area is copy-permitted data.

15. The copy prevention method according to claim 12 or 13, wherein the data area monitoring step monitors whether a user who stores data in the data area is a person who is permitted to copy the data.

16. The copy prevention method according to claim 12 or 13, wherein the data area monitoring step monitors whether the number of times of copying data stored in the data area is a predetermined number of times.

17. The copy prevention method according to claim 12 or 13, wherein the screen copy instruction monitoring step monitors whether the screen copy instructed data is copy-permitted data.

18. The copy prevention method according to claim 12 or 13, wherein the screen copy instruction monitoring step monitors whether a user who instructs the screen copying is a person who is permitted to copy the data.

19. The copy prevention method according to claim 12 or 13, wherein the screen copy instruction monitoring step monitors whether the number of times of an instruction is a predetermined number.

20. The copy prevention method according to claim 12, wherein the data area copy preventing step processes data stored in the data area.

21. The copy prevention method according to claim 13, wherein the screen copy preventing step invalidates the function a screen copy instruction, processes data displayed on the screen, and processes data stored in the data area.

22. The copy prevention method according to claim 12 or 13, further comprising a setting step that selectively receives and sets a monitoring method by the screen copy instruction monitoring step, a prevention method by the screen copy preventing step, a monitoring method by the data area monitoring step, and/or a prevention method by the data area copy preventing step.

23. A computer program that implements on a computer a copy prevention method that is provided by an operating system and that prevents copying of data using a data area shared by a plurality of applications that operate on the operating system, the computer program causing the computer to execute:
a data area monitoring step that monitors storing of copy prevention data into the data area; and
a data area copy preventing step that prevents copying of the copy prevention data from the data area, based on a result of the monitoring by the data area monitoring step.

24. The computer program according to claim 23, the computer program further causing the computer to execute:
a screen copy instruction monitoring step that monitors input of a screen copy instruction determined by an operating system, regarding the copy prevention data; and
a screen copy preventing step that prevents copying of the copy prevention data displayed on a screen using the screen display, based on a result of the monitoring by the screen copy instruction monitoring step.

25. The computer program according to claim 23 or 24, wherein the data area monitoring step monitors whether data stored in the data area is copy-permitted data.

26. The computer program according to claim 23 or 24, wherein the data area monitoring step monitors whether a user who stores data in the data area is a person who is permitted to copy the data.

27. The computer program according to claim 23 or 24, wherein the data area monitoring step monitors whether the number of times of copying data stored in the data area is a predetermined number of times.

28. The computer program according to claim 23 or 24, wherein the screen copy instruction monitoring step monitors whether the screen copy instructed data is copy-permitted data.

29. The computer program according to claim 23 or 24, wherein the screen copy instruction monitoring step monitors whether a user who instructs the screen copying is a person who is permitted to copy the data.

30. The computer program according to claim 23 or 24, wherein the screen copy instruction monitoring step monitors whether the number of times of an instruction is a predetermined number.

31. The computer program according to claim 23, wherein the data area copy preventing step processes data stored in the data area.

32. The computer program according to claim 23, wherein the screen copy preventing step invalidates the function a screen copy instruction, processes data displayed on the screen, and processes data stored in the data area.

33. The computer program according to claim 23 or 24, further comprising a setting step that selectively receives and sets a monitoring method by the screen copy instruction monitoring step, a prevention method by the screen copy preventing step, a monitoring method by the data area monitoring step, and/or a prevention method by the data area copy preventing step.
